# EUROPEAN PATENT APPLICATION

(11) **EP 0 700 006 A1**
(43) Date of publication of application: **06.03.1996**
(21) Application number: 95201804.2
(22) Date of filing: 03.07.1995
(51) Int. Cl.: G06F 17/21

(54) **Printing device**

(30) Priority: 28.07.1994 NL 9401237
(71) Applicant: Océ-Nederland B.V., NL-5914 CC Venlo (NL)
(72) Inventor: Verhaar, Ida Cornelia, NL-5721 VM Asten (NL); Dijkstra, Jan Willem, NL-5622 CX Eindhoven (NL); Gerritsen, Jan, NL-6546 EJ Nijmegen (NL); Martens, Wilhelmus Johannes, NL-5951 JE Belfeld (NL)
(74) Representative: Hanneman, Henri W.A.M.

(57) **Abstract**

A printing device comprising a printing unit for making prints of data and a processing device, the processing device being connected to a display unit, an input unit and a memory adapted to store data of a number of documents, each document containing one or more pages, characterised in that the processing device is provided with a bundling program for making a bundle, the bundle containing data of a number of documents and the printing unit printing the data of the bundle on a signal input via the input unit.

## Description

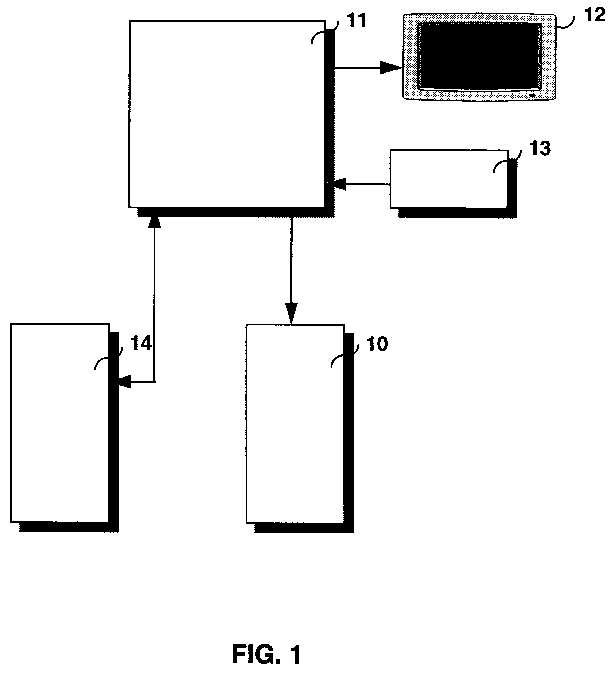

The invention relates to a printing device in accordance with the preamble of claim 1. A printing device of this kind comprises a printing unit (10) (see Fig. 1) and a processing device (11) connected to a display unit (12), an input unit (13) and a memory (14). Data of a number of documents can be stored in memory (14). A document may consist of one single page or a number of pages. By means of a program stored in the processing device (11) an operator can select a document from the memory (14), via a menu reproduced on the display unit (12), and give the printing unit (10) a command to print such document on a number of receiving sheets. The operator can then select another document and have it printed.

In an organisation having a central reprographics department, it is conventional for prints to be ordered from a number of documents. The operator selects in the manner described above a document from the memory and has that document printed by the printing unit (10). After all the documents have been selected and printed, they are collected by the operator. He then fills in a form with the details of the person giving the order, the titles or document numbers of the printed documents, the number of prints made, special prints, and so on. This form is sent to the accounts department for the purpose of charging to the person giving the order, and a copy thereof is added to the collected documents. The collected documents and the copy of the form are sent to the person giving the order. In some cases, for example in libraries, the accounts department first prepares an invoice on a form belonging with the order and sends it separately or in the same envelope with the printed documents to the person giving the order.

This procedure is fairly complicated. It delays the completion of an order and there is a considerable risk of the operator making errors.

The object of the invention is to obviate these and other disadvantages.

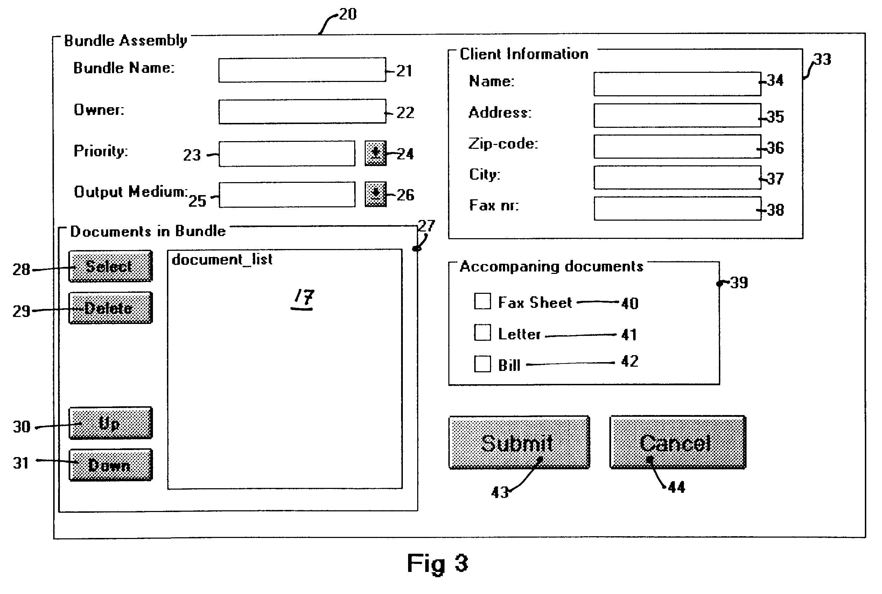

In a printing device according to the preamble, this object is achieved by the invention, which is characterised in that the processing device is provided with a bundling program for making a bundle, the bundle containing data of a number of documents and the printing unit printing the data of the bundle on a signal input via the input unit.
As a result, the printing device processes the orders bundle-wise so that errors by the operator are restricted to a minimum and an extremely efficient completion of an order is achieved.
These and other advantages will be apparent from the following description with reference to a number of figures wherein:
Fig. 1 diagrammatically illustrates a known printing device,
Fig. 2 diagrammatically illustrates a printing device according to the invention,
Fig. 3 shows a first display on the display unit of a printing device according to the invention,
Fig. 4 shows a second display on the display unit of a printing device according to the invention, and
Fig. 5 is a sub-display of that shown in Fig. 4.

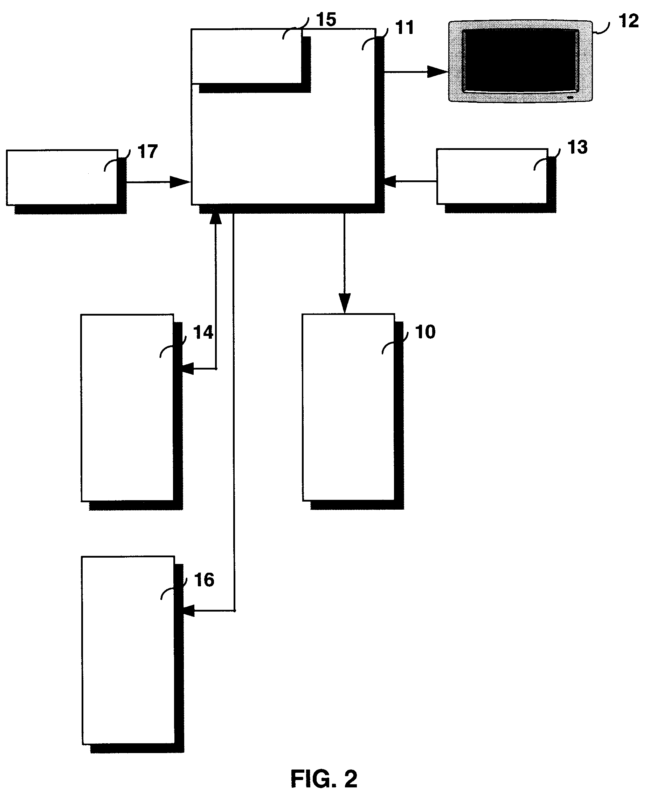

Fig. 2 shows a printing device according to the invention diagrammatically. A processing device (11) is provided with a display unit (12) and is connected to an input unit (13). The processing device with the connected units can be a personal computer or any other means whereby processing programs can be performed. The input unit (13) is a keyboard and a mouse by means of which a cursor can be moved over a screen and by means of which specific boxes on the screen can be selected.
The processing device (11) comprises a bundling program (15), the operation of which will be explained in detail hereinafter. The processing device (11) is also connected to a mass memory (14) in the form of a disc memory in which data relating to a number of documents are stored in compressed form or otherwise. The memory may also be an external memory connected, for example, by a network to the processing device. The data may originate from a digital archive or from documents scanned by means of a scanner (17) connected to the processing device (11). Data can also be fed to the memory (14) and stored from external data bases (16) via a modem (not shown) and via the processing device. The bundling program (15) installed on the processing device (11) is a menu-controlled program, so that the user can perform this program via images on the display unit (12).
A first image displayed on the display unit (12) after the starting up of the bundling program (15) is shown in Fig. 3, this being the bundle assembly screen (20). By means of the mouse, the cursor can always be brought to one of the numbered fields and the associated box selected, whereupon numeric characters can be filled in in these boxes, by means of the numeric keyboard where applicable. It is also possible to traverse the boxes sequentially with a suitable program, the operator always filling in the consecutive boxes. In the following description, the sequence in which the various boxes are filled in is arbitrary.
The operator fills in the name of the bundle to be made in box (21) and the possible owner in box (22). By selecting box (24) with the cursor, box (23) displays a designation enabling the priority of the printing of the present bundle to be indicated in relation to other bundles. With the selection of box (26), box (25) displays names of printing devices with which the bundle can be printed. Field (27) is used for assembling a bundle. By means of box (28) a sub-menu is called up in which the various names of documents are shown with their associated data concerning directories. The operator can always select a document from this (with the mouse) and the name of that document is shown in box (17). After selection of a number of documents, a list of documents together forming a bundle is shown in box (17). A previously selected document is erased by "delete", box (29).
The documents can also be placed in a different required sequence by selection via the mouse in box (17) so that the documents occupy a logical place in the bundle. The sequence of a document list can be changed with UP (30) and DOWN (31). Field (33) can give the data of the client/person giving the order, e.g. name, box (34); address, box (35); zip code, box (36); city, box (37) and fax number, box (38). Field (39) can be used to indicate whether extra information must be added to the bundle.
With the selection of box (40) the processing device generates a fax front page which is added to the bundle. This fax front page is also stored in the memory and has a standard layout. The program now generates support data in the form of those data which relate specifically to the present bundle and data as stored in field (33). The fax support document thus formed is added in the document list (30) and is so positioned in the bundle that after prints of the bundle have been made the fax support document is in the correct position at the top of the bundle.
Similarly, box (41) can be used to select a letter from a number of standard letters stored in the memory and be automatically provided with the data of the receiver/client. This letter can also give an indication of the documents forming the bundle. The support data required for this purpose can be derived from the document list (17).

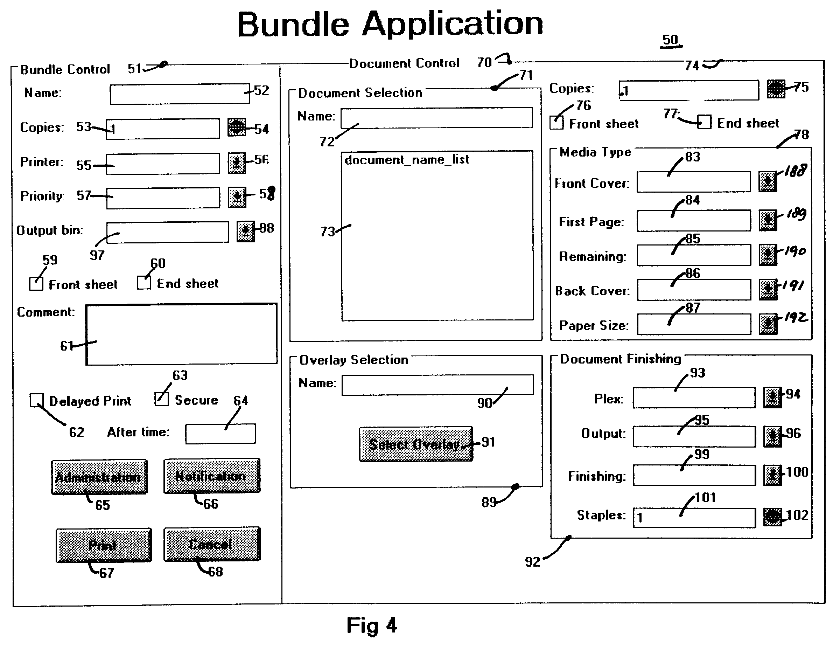

Finally, selection of box (42) enables data to be generated relating to the costs to be charged to the client, e.g. in connection with the number of copies, the origin of the documents with the copyright charges based thereon, completion of the bundle, dispatch costs and so on. The calculated values are automatically filled in on a standard form and the data is added to the bundle. Thus without the intervention of the accounts department the client receives the invoice with the bundle. A command in box (44) destroys the bundle assembly so that a new bundle can be input.
"Submit" in field (43) indicates that the formation of the bundle is completed so that it can be printed. After a command in "submit" (43), a menu-screen appears on the display unit (12) as shown in Fig. 4.

Field (51) comprises commands relating to the bundle as a whole. Thus box (52) shows the name of the bundle as previously input in box (21) (Fig. 3).
Commands in box (54) change the number of required copies of the bundle and the total number required is displayed in box (53). Similarly, the printer required can be set via box (56) (displayed in box (55)) and the priority of the bundle printing can be determined via box (58). A front page (59) and a back page (60) for the bundle can also be selected. Any remarks can be input in field (61).

Box (98) can be used to select the output bin in which the bundle is to be deposited and box (97) displays the selected bin.

If box (62) is selected "delayed print", box (64) indicates the time to be awaited until the selected bundle can be printed.

Selection of box (63) displays the demand for a password to be input. After the password has been input printing can start.

Selection of box (65) gives a survey on the screen of all the bundles which have been processed, for example, on a day or have already been programmed but not yet printed.

Selection of (66) enables the user to obtain feedback from the printer, e.g. a signal to show when a bundle has been finished. "Cancel" (68) enables the entire setting to be erased and restarted.

A command in box (67) actually starts the printing of a bundle or starts the time as indicated in field (64) after which printing really takes place after expiry of that time. If the printer is occupied in printing a bundle a new bundle can be assembled.

The commands in field (70) enable the user to print individual documents in the bundle in different ways. Field (71) is used for the selection and field (72) shows the name of the document selected from the document list (73).

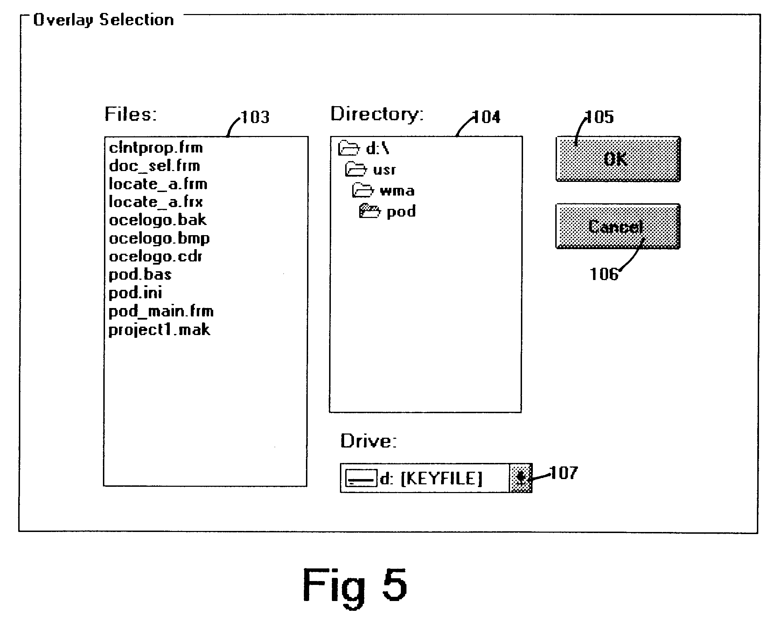

The individual pages in the selected document can each be provided with an overprint which can be selected via field (89). Giving a command in field (91) brings a new screen display as shown in Fig. 5. In field (103) (Fig. 5) the file names are displayed which occur in a specific directory and which can each generate a specific overlay.

Box (74) indicates how many copies of a specific document in the bundle must be printed and this number can be changed by box (75). A special front page can be selected for a document by means of a command in field (76) and a back page in field (77).

Field (78) can be used for selections comprising a specific document in the bundle. In box (83) and associated operating field (88) a special front page can be selected for a document, e.g. a pre-printed sheet, or a sheet pre-printed with a logo. These various sheets are automatically available for a print from separate bins present in the printing unit (10).

In box (84) and associated operating field (189) it is possible to indicate whether a first page of a document is to be printed on a special receiving sheet. This is usually the case for printing letters in which the first page is often provided with all kinds of data or a logo and the subsequent pages are generally not pre-printed.

The other receiving sheets can be specified in operating box (190) and designation box (85) and the back page can be set in boxes (191) and (86). Finally, the format of the receiving sheets can be specified on operating box (192) and the selected format indicated in box (87).

Field (110) can be used to indicate the way in which the specific document is to be printed. The boxes (93, 95, 99 and 101) always indicate the selected setting which can be selected on the associated boxes (94, 96, 100) and (102).
Box (94) enables a choice to be made from simplex or duplex printing, box (96) collating or non-collating mode, and box (100) a choice between two-up mode (i.e. print two pages on one receiving sheet) and book mode with which booklets can automatically be printed.
Box (102) allows a choice between stapling or otherwise, with one or two staples per document.

With the printing device according to the invention, document flow is highly optimised. In a bundle for a specific client, the invoice and/or cover note are automatically printed as well. In actual fact the invoice and the letter are standard texts, in which only the client and the address have to be filled in and the invoice amount calculated. The standard texts are present in the memory (14). A digitised order ticket (job ticket info) can be used to set the variable text in the documents. In this way, typing letters is superfluous and the accounts can be removed from the direct line of document flow.

The bundling program 15 can generate not only the said covering letter but also a list of contents, reply card or order form.

The various units used in the printing device according to the invention can be interconnected via a network so that although they do not form a physical unit they do form a functional unit.

The invention is not limited to the embodiment described but can be modified as required by the skilled man, although such modifications will come under the following claims.

## Claims

1. A printing device comprising a printing unit for making prints of data and a processing device, the processing device being connected to a display unit, an input unit and a memory adapted to store data of a number of documents, each document containing one or more pages, characterised in that the processing device is provided with a bundling program for making a bundle, the bundle containing data of a number of documents and the printing unit printing the data of the bundle on a signal input via the input unit.

2. A printing device according to claim 1, characterised in that the processing device generates support data associated with a specific bundle and wherein said data are added to the data of the bundle and printed by the printing unit on a support document.
